# EUROPEAN PATENT SPECIFICATION

(11) **EP 0 720 782 B1**
(45) Date of publication and mention of the grant of the patent: **22.07.1998**
(21) Application number: 94927010.2
(22) Date of filing: 22.09.1994
(51) Int. Cl.: H02H 7/085

(54) **A DRIVE ASSEMBLY FOR POWER OPERATED DOORS**
ANTRIEBSEINHEIT FÜR MOTORISCH ANGETRIEBENE TÜREN
EQUIPEMENT MOTEUR POUR PORTES AUTOMATIQUES

(30) Priority: 23.09.1993 GB 9319669
(43) Date of publication of application: 10.07.1996
(73) Proprietor: Vega Limited, Warrington, Cheshire WA3 6GG (GB)
(72) Inventor: OAKLEY, John, Edward, Clwyd LL14 5BJ (GB)
(74) Representative: Hill, Richard
(86) International application number: GB9402061
(87) International publication number: WO9508859

(56) References cited:
- EP-A- 0 399 283
- GB-A- 2 055 230
- US-A- 4 468 596
- US-A- 5 218 282

## Description

This invention relates to a drive assembly for power operated doors and more particularly to sectional and roller shutter doors for use in domestic or industrial environments.

It is known to operate sectional and roller shutter doors automatically using a drive assembly comprising an AC motor linked to the operating shaft of the door by a clutch and chain drive. Such a drive assembly requires the use of limit switches to detect the open and closed positions of the door so that the drive can be stopped at the correct time, and a sensitive strip along the bottom edge of the door to detect obstructions when the door is being closed, detection of an obstruction disabling the drive assembly. Accordingly, these drive mechanisms can be expensive to fit and are prone to failure due to overloading and general wear and tear.

One particular type of automated door is described in UK Patent No. 2247719B. The door is driven by a DC motor mounted to one side of the door and coupled to the door via looped tape which interacts with the door assembly through an operating mechanism. A problem arises with this arrangement insofar as the operating mechanism can be unreliable due to wear and tear and the collection of dirt. Furthermore, if the power fails the door can only be manually operated by first disconnecting the motor from the drive chain.

It is an object of the present invention to obviate or mitigate the aforesaid disadvantages and to provide a simplified drive assembly for a power operated door which is reliable and relatively inexpensive.

According to the present invention there is provided a drive assembly for a power operated door assembly comprising a DC motor coupled to an operating shaft operable to cause said door to move between open and closed positions and control means to control operation of the DC motor, the control means including a current sensing device adapted to sense current supplied to said motor and to disable said motor when said sensed current deviates substantially from predetermined values therefor, said control means further including a transformer and rectifier means whereby said drive assembly can be powered from an AC supply and be capable of supplying a DC voltage to drive a DC motor, characterised in that, the control means includes a DC back-up power supply, said DC back-up power supply being charged by the AC supply via the transformer and rectifier means, said back-up supply supplying the voltage to drive the motor.

The provision of a current sensing means which is responsive to changes in the current supplied to the motor eliminates the need for travel limit switches or touch sensitive strips.

Furthermore, since the DC motor is coupled directly to the operating shaft, the drive mechanism is reduced in bulk and complexity and therefore the reliability is increased and scope for failure due to overload or wear and tear is reduced.

Preferably the control means includes transformer and rectifier means to allow the control means to be powered from a conventional AC supply means and be capable of supplying a DC voltage to operate the DC motor. In a particularly preferred embodiment the control means includes at least one back-up power supply which is maintained in charge by said transformer and rectifier means connected to a mains supply, the DC voltage for the motor being supplied by the back-up power supply.

Preferably the current sensing device comprises a Metal Oxide Semiconductor Field Effect Transistor (MOSFET) connected to a monitoring circuit, which monitoring circuit monitors the current flow through the MOSFET. Preferably the monitoring circuit is connected in the drain-source circuit of the MOSFET and comprises a series resistance whereby the current flow is monitored by measurement of the voltage developed across the resistance.

Preferably the current sensing device is connected to a switching circuit which, when said current deviates substantially from said predetermined value, is operable to reverse the polarity of said motor thereby to stop said motor. By reversing the polarity of the motor in this manner, not only is the motor disabled in those conditions which can be caused by the door being obstructed or having reached its open or closed position, but a dynamic braking effect is applied to the motor. Most preferably, the switching circuit comprises two relays connected so as to form a reverse pair.

Preferably the control means is under the control of a suitably programmed microcontroller.

Specific embodiments of the present invention will now be described, by way of example only, with reference to the accompanying drawings, in which:
**Fig. 1** is a perspective view of a power operated door incorporating one form of drive assembly in accordance with the present invention;
**Fig. 2** is a schematic view of a part of the drive assembly of Fig. 1; and
**Fig. 3** is a circuit diagram of a control system for the drive assembly of Fig. 1.

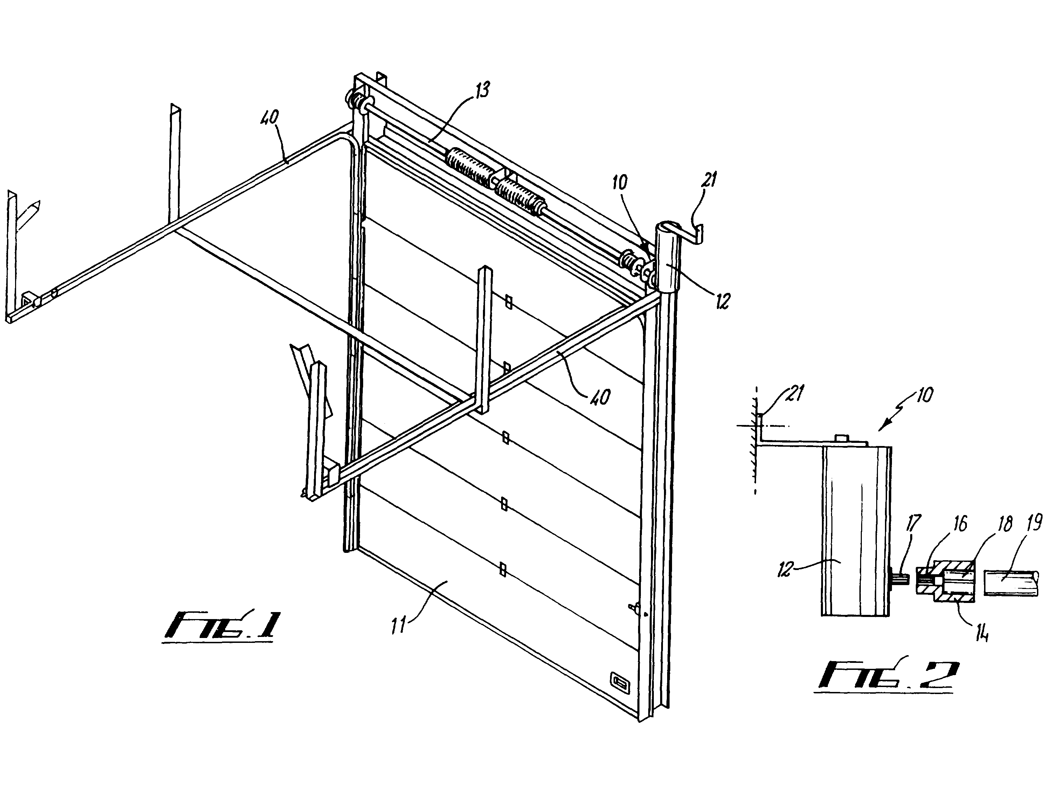

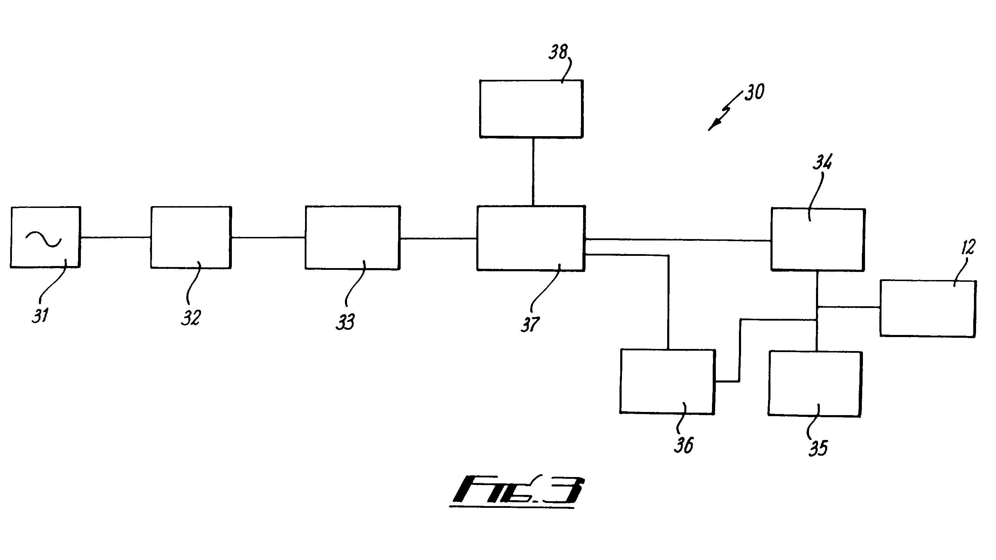

Referring now to the figures, there is shown in Figs. 1 and 2 a drive assembly 10 for automatically driving a powered sectional door 11. The drive assembly 10 comprises a DC motor 12 which is connected directly on to a torsion spring shaft assembly 13 by means of a coupling 14 which is shown in detail in Figure 2. The coupling 14 has an aperture 16 at one end which locates over an output shaft 17 of the motor 12 and an aperture 18 at the other end which is fastened to the torsion spring shaft 19. The motor 12 is fixed to part of the building structure by means of an L-shaped bracket 21. If desired, the bracket 21 can be a shock absorption bracket to prevent damage to internal components of the motor when in use.

The DC motor 12 is connected to a control circuit 30 which is shown schematically in Figure 3. The control circuit 30 controls operation of the motor 12, and hence the door 11.

The control circuit comprises an AC supply 31, which may be formed by a suitable connection into the mains system of a building (not shown) which is linked to a filter and suppression circuit 32. The filter and suppression circuit 32 acts to filter out any noise signals and the suppression circuit acts to suppress any transient voltages which might occur in the supply. The filtered and suppressed AC voltage is rectified in a rectification circuit 33 which may comprise a bridge rectification circuit and is then transformed in a step down transformer to provide a DC voltage of approximately 24 volts to drive the DC motor 12. Interposed between the motor 12 and the transformer 33 is a pair of relay switches 34, 35 connected preferably in reverse pair configuration. The relays 34, 35 are configured in such a way that, under circumstances to be hereinafter described, the polarity of the motor 12 can be reversed by relay 35 to stop the motor 12. A current sensing circuit 36, for example a suitable circuit incorporating a power MOSFET linked to a monitoring circuit is connected to the motor 12 in such a manner that the monitoring circuit is capable of monitoring the current supplied to the motor 12 and, when a current above a predetermined limit is sensed, to send a signal to the microcontroller 37 which switches the relay 35 to stop the motor 12. The monitoring circuit comprises a series resistance connected to the drain-source circuit of the MOSFET and monitors the current in the drain-source current of the MOSFET by monitoring the voltage developed across the series resistance.

Connected to the current sensing device 36 and relays 34, 35 is a microcontroller 37 which controls operation of the control circuits. A user operable control 38 is linked to the microcontroller 37 and is operable to allow actuation of the control circuit.

In use, with the sectional door 11 in the closed position, as shown in Figure 1, a user wishing to open the door actuates the control circuit using the user control 38, which conveniently may be part of a control panel mounted adjacent the door. When the user control 38 is actuated, power is supplied to the microcontroller 37 which is programmed so as to control operation of the circuit in the following manner:

When the user control 38 is actuated, after a delay of approximately 30ms, a voltage is applied to the motor 12 via one of the relays 34 to start driving the motor 12. As the motor 12 is driven, via the drive assembly 16, 17, 18, 19 shown in Figure 2, the sectional door 11 is moved upwardly and then rearwardly onto the tracks 40. Whilst the motor 12 is being driven, the microcontroller 37 monitors the running time of the motor 12 (e.g. via a decrementing counter) as an indication of the distance of travel of the door to effect a full opening (or closing ) thereof. Once the running time of the motor 12 has been determined then this is stored in the microcontroller 37 for subsequent opening and closing operations of the door.

Whilst the motor 12 is driving, the current supply to the motor 12 is monitored by the current sensing circuit 36. If the current sensing circuit 36 detects a rise in the current supplied to the motor 12, for example if the door encounters an obstruction or reaches its fully open or closed positions, the current sensing device 36 feeds a signal to the microcontroller 37 which activates relay 35 thereby reversing the polarity of the motor 12 thereby stopping it. Thus the current sensing device 36 can override the normal operation of the door 11 in the circumstances where, for example, an obstruction is present in the path of the door or the door reaches its fully opened or closed positions. In normal operation of the door, as described above, the running time of the motor 12 stored in the microcontroller 37 will ensure that the motor is disabled as soon as the door reaches its fully open or closed position.

If desired, an audible alarm (no shown) can be included in the control circuit which is caused to actuate when the door reaches its fully open or closed position.

Furthermore, a timer circuit (not shown) may also be included which is operable to deactivate the motor 12 after a predetermined time (e.g. 90 seconds), if the motor 12 has not been otherwise deactivated. This circuit can assist in prevention of burn out of the motor in the event of failure of the current sensing device 36 and/or microcontroller 37. It may also assist in prevention of serious injury to any person who may be causing an obstacle to the opening or closing of the door.

Whilst in the embodiment described the power supply is in the form of a transformed and rectified AC mains supply, it is equally possible to use a rectified and transformed AC supply to charge up a rechargeable DC supply, the DC supply providing the power supply directly to the relays 34, 35 and motor 12.

Whilst the invention is described primarily in terms of its application to a powered sectional door, it will be appreciated that the invention can be used with other types of doors such as roller shutter doors, roller shutter seats, grilles and overhead canopy doors.

It is of course to be understood that the invention is not intended to be restricted to the details of the above embodiment which are described by way of example only.

For example it is also possible to utilise a hall effect device to assist in the monitoring of the running time of the motor 12. In this case, the hall effect device is associated with the motor 12 and produces an output of pulses which is dependent on the rate of operation of the motor 12 and can be used to clock a counter. Thus, once the door 11 has been operated once, the counter will store the number of pulses which require to be counted before disabling the motor and which is indicative that the door is fully open or closed. Alternatively the mark-space ratio of the pulses generated by the hall effect device can be monitored, since this ratio is also indicative of the rate of operation of the motor and hence whether the door has encountered an obstruction or has reached its fully open or closed position.

## Claims

1. A drive assembly for a power operated door assembly comprising a DC motor coupled to an operating shaft operable to cause the door to move between open and closed positions and control means to control operation of the DC motor, the control means including a current sensing device adapted to sense current supplied to said motor and to disable said motor when said sensed current deviates substantially from predetermined values therefor, said control means further including a transformer and rectifier means whereby said drive assembly can be powered from an AC supply and be capable of supplying a DC voltage to drive a DC motor, characterised in that, the control means includes a DC back-up power supply, said DC back-up power supply being charged by the AC supply via the transformer and rectifier means, said back-up supply supplying the voltage to drive the motor.

2. A drive assembly according to claim 1 wherein the control means includes a transformer and rectifier means whereby said drive assembly can be powered from an AC supply and be capable of supplying a DC voltage to drive the DC motor.

3. A drive assembly according to claim 2 wherein the control means includes a DC back-up power supply, said DC back-up power supply being charged by the AC supply via the transformer and rectifier means, said back-up supply supplying the voltage to drive the motor.

4. A drive assembly according to any one of claims 1 to 3 wherein the current sensing device comprises a circuit including at least one power MOSFET connected to a monitoring circuit, which monitoring circuit monitors the flow of current through the MOSFET.

5. A drive assembly according to claim 4 wherein the monitoring circuit is connected in the drain-source circuit of the MOSFET and comprises a series resistance whereby the current flow through the MOSFET is monitored by measurement of the voltage developed across the resistance.

6. A drive assembly according to any one of claims 1 to 5 wherein the current sensing device is connected to a switching circuit which, when said current deviates substantially from said predetermined value, is operable to reverse the polarity of said motor thereby to stop said motor.

7. A drive assembly according to any one of claims 1 to 6 wherein the switching circuit comprises first and second relays connected to said motor, said first and second relays being connected so as to form a reverse pair.

8. A drive assembly according to claim 6 or claim 7 wherein said switching circuit includes a microcontroller which is operable to switch the power supply between said first and second relay dependent upon the current sensed by said current sensing device.

## Patentansprüche

1. Antriebseinheit für einen Torantrieb, bestehend aus einem mit einer Antriebswelle verbundenen Gleichstrommotor zum Bewegen des Tores zwischen einer Öffnungsund einer Schließstellung und einer Steuerung zum Betrieb des Gleichstrommotors, wobei die Steuerung eine Strommeßvorrichtung zum Erfassen des dem Motor zugeführten Stromes aufweist und den Motor abschaltet, wenn der gemessene Strom von vorgegebenen Werten wesentlich abweicht, wobei die Steuerung ferner einen Transformator und einen Gleichrichter aufweist und die Antriebseinheit aus einer Wechselstromquelle gespeist ist und zum Antrieb des Gleichstrommotors eine Gleichstromspannung zur Verfügung steht,
dadurch gekennzeichnet, daß die Steuerung eine Ersatz-Gleichstromversorgung aufweist, die über den Transformator sowie über Gleichrichter von der Wechselstromversorgung geladen wird und die Spannung zum Betrieb des Motors liefert.

2. Antriebseinheit nach Anspruch 1,
wobei die Steuerung einen Transformator sowie Gleichrichter aufweist, wobei die Antriebseinheit von einer Wechselstromquelle gespeist ist und eine Gleichstromspannung zum Antrieb des Gleichstrommotors zur Verfügung stellt.

3. Antriebseinheit nach Anspruch 2,
wobei die Steuerung eine Ersatz-Gleichstromversorgung aufweist, die über den Transformator sowie über Gleichrichter von der Wechselstromversorgung geladen wird und die Spannung zum Betrieb des Motors liefert.

4. Antriebseinheit nach einem der Ansprüche 1 bis 3, wobei die Strommeßvorrichtung einen Schaltkreis mit mindestens einem MOSFET-Leistungstransistor aufweist, der mit einem Überwachungskreis verbunden ist, der den Stromfluß durch den MOSFET überwacht.

5. Antriebseinheit nach Anspruch 4,
wobei der Überwachungskreis mit dem Drain-Source-Kreis des MOSFET verbunden ist und einen Reihenwiderstand aufweist, wobei der Stromfluß durch den MOSFET durch Messung der am Widerstand abfallenden Spannung überwacht wird.

6. Antriebseinheit nach einem der Ansprüche 1 bis 5, wobei die Strommeßvorrichtung mit einem Schaltkreis verbunden ist, der bei wesentlicher Abweichung des Stromes von dem vorgegebenen Wert die Polarität des Motors umschaltet, um den Motor zu stoppen.

7. Antriebseinheit nach einem der Ansprüche 1 bis 6, wobei der Schaltkreis an den Motor angeschlossene erste und zweite Relais aufweist, die zur Bildung einer Umkehrschaltung miteinander verbunden sind.

8. Antriebseinheit nach Anspruch 6 oder 7,
wobei der Schaltkreis einen Mikrocontroller aufweist, der in Abhängigkeit von dem von der Strommeßvorrichtung gemessenen Strom die Stromversorgung zwischen dem ersten und dem zweiten Relais umschaltet.

## Revendications

1. Ensemble d'entraînement pour ensemble de porte actionné mécaniquement comprenant un moteur à courant continu associé à un arbre d'actionnement actionnable pour amener la porte à se mouvoir entre des positions ouverte et fermée et des moyens de commande pour commander l'actionnement du moteur à courant continu, les moyens de commande comprenant un dispositif de détection de courant adapté pour détecter le courant fourni audit moteur et pour désactiver ledit moteur quand ledit courant détecté s'écarte notablement de valeurs prédéterminées, lesdits moyens de commande comprenant de plus un transformateur et des moyens redresseurs par lesquels ledit ensemble d'entraînement peut être énergisé depuis une alimentation en courant alternatif et être capable de fournir une tension en courant continu pour entraîner un moteur à courant continu, caractérisé en ce que les moyens de commande comprennent une alimentation en énergie de réserve à courant continu, ladite alimentation en énergie de réserve en courant continu étant chargée par l'alimentation en courant alternatif via le transformateur et les moyens redresseurs, ladite alimentation de réserve fournissant la tension pour entraîner le moteur.

2. Ensemble d'entraînement selon la revendication 1, dans lequel les moyens de commande comprennent un transformateur et des moyens redresseurs par lesquels ledit ensemble d'entraînement peut être énergisé depuis une alimentation en courant alternatif et être capable de fournir une tension en courant continu pour entraîner le moteur à courant continu.

3. Ensemble d'entraînement selon la revendication 2, dans lequel les moyens de commande comprennent une alimentation en énergie de réserve en courant continu, ladite alimentation en énergie de réserve en courant continu étant chargée par l'alimentation en courant alternatif via le transformateur et les moyens redresseurs, ladite alimentation de réserve fournissant la tension pour entraîner le moteur.

4. Ensemble d'entraînement selon l'une quelconque des revendications 1 à 3, dans lequel le dispositif de détection de courant comprend un circuit comprenant au moins un MOSFET de puissance connecté à un circuit de contrôle, lequel circuit de contrôle contrôle le débit de courant à travers le MOSFET.

5. Ensemble d'entraînement selon la revendication 4, dans lequel le circuit de contrôle est connecté dans le circuit drain-source du MOSFET et comprend une résistance série par laquelle le débit de courant à travers le MOSFET est contrôle par mesure de la tension développée aux bornes de la résistance.

6. Ensemble d'entraînement selon l'une quelconque des revendications 1 à 5, dans lequel le dispositif de détection de courant est connecté à un circuit de commutation qui, quand ledit courant dévie notablement de ladite valeur prédéterminée, est actionnable pour inverser la polarité dudit moteur afin d'arrêter ledit moteur.

7. Ensemble d'entraînement selon l'une quelconque des revendications 1 à 6, dans lequel le circuit de commutation correspond des premier et second relais connectés audit moteur, lesdits premier et second relais étant connectés afin de former une paire inverse.

8. Ensemble d'entraînement selon la revendication 6 ou la revendication 7, dans lequel ledit circuit de commutation comprend un micro-contrôleur qui est actionnable pour commuter l'alimentation en énergie entre lesdits premier et second relais en fonction du courant détecté par ledit dispositif de détection de courant.
